# EUROPÄISCHE PATENTSCHRIFT

(11) **EP 1 315 919 B1**
(45) Veröffentlichungstag und Bekanntmachung des Hinweises auf die Patenterteilung: **09.11.2005**
(21) Anmeldenummer: 01974026.5
(22) Anmeldetag: 01.09.2001
(51) Int. Cl.: F16G 15/00

(54) **BAUTEIL ZUM EINSTELLEN BZW. VERÄNDERN DER WIRKSAMEN LÄNGE EINER RUNDSTAHLKETTE**
COMPONENT FOR REGULATING OR MODIFYING THE EFFECTIVE LENGTH OF A ROUND STEEL CHAIN
PIECE DESTINEE A AJUSTER OU A MODIFIER LA LONGUEUR EFFICACE D'UNE CHAINE EN ACIER ROND

(30) Priorität: 04.09.2000 DE 10044531
(43) Veröffentlichungstag der Anmeldung: 04.06.2003
(73) Patentinhaber: RUD-Kettenfabrik Rieger & Dietz GmbH u. Co., 73432 Aalen-Unterkochen (DE)
(72) Erfinder: SMETZ, Reinhard, 86720 Baldingen (DE)
(74) Vertreter: Grünecker, Kinkeldey, Stockmair & Schwanhäusser Anwaltssozietät
(86) Internationale Anmeldenummer: PCT/DE2001/003423
(87) Internationale Veröffentlichungsnummer: WO 2002/021014

(56) Entgegenhaltungen:
- EP-A- 0 130 138
- EP-B- 0 736 150
- GB-A- 2 088 520
- GB-A- 2 127 129

## Beschreibung

### Technisches Gebiet

Die Erfindung betrifft ein Bauteil zum Einstellen bzw. Verändern der wirksamen Länge von Rundstahlketten, bei dem in einem Grundkörper mindestens zwei sich kreuzende Schlitze angeordnet sind, die in ihrem Kreuzungsbereich eine Einführ- bzw. Durchziehöffnung für die jeweilige Kette bilden und von denen einer länger als der andere ist, wobei der jeweils längere Schlitz außerhalb des Kreuzungsbereiches der Schlitze von zwei Stützzonen begrenzt wird, die zur Abstützung des bogenförmigen Endes jeweils eines Kettengliedes dienen, das auf ein mit seinen Schenkeln in den längeren der beiden Schlitze eingeführtes Kettenglied folgt, welch letzteres durch ein Sperrelement gegen eine Verlagerung in den Bereich der Ein- bzw. Durchziehöffnung sicherbar ist.

### Stand der Technik

Aus der EP 0 736 150 B1 ist ein Bauteil der vorstehenden Art bekannt, bei dem der Grundkörper an seinem einen Ende die sich kreuzenden Schlitze und an seinem anderen Ende eine Verkürzungsklaue aufweist. Während die sich kreuzenden Schlitze lediglich zur Positionierung und anschließenden dauerhaften Anbringung des Bauteils an einer bestimmten Stelle der Kette genutzt werden, dient die Verkürzungsklaue zur Anpassung der Länge der Kette an wechselnde Gegebenheiten. Das Sperrelement für das in das dem Kreuzungsbereich abgewandte Ende des längeren Schlitzes eingeführte Kettenglied wird bei dem bekannten Bauteil von einer Spannhülse oder einem Spannstift gebildet, der den längeren Schlitz zwischen dem Kreuzungsbereich der Schlitze und dem sich am dem Kreuzungsbereich abgewandten Ende dieses Schlitzes befindlichen Kettenglied überbrückt. Die Art des verwendeten Sperrelementes bringt es mit sich, daß eine Veränderung der Position des Bauteils an der Kette nur mit einem vergleichsweise großen Aufwand und unter Zuhilfenahme von Werkzeugen möglich ist. Zur Sicherung des in die Verkürzungsklaue des Bauteils eingehängten Kettengliedes des jeweils zu verkürzenden Kettenstrangabschnittes dient demgegenüber ein gegen die Wirkung einer Feder hin- und herbewegbarer Verriegelungsbolzen, der in sich gegenüberliegenden Seitenwänden des Klauenmaules gelagert ist und der in seiner Sperrstellung in den Zwischenraum zwischen den Bugen zweier aufeinanderfolgender Glieder gleicher Orientierung ragt. Der Bolzen besitzt eine Nut, die in einer bestimmten Lage die Entfernung des in die Klaue eingehängten Kettengliedes aus der Klaue gestattet.

### Darstellung der Erfindung

Der Erfindung liegt die Aufgabe zugrunde, bei einem gattungsgemäßen Bauteil auch die von den sich kreuzenden Schlitzen gebildete Einführ- bzw. Durchziehöffnung für die Kette mit einem Sperrelement zu versehen, das eine problemlose und schnelle Veränderung der Ausgangslage des Bauteils an der Kette erlaubt.

Gelöst wird diese Aufgabe erfindungsgemäß dadurch, daß das Sperrelement aus einem hin- und herbewegbaren, an seinem Umfang mit mindestens einer Nut versehenen Bolzen besteht, daß der Bolzen durch eine Feder in einer ersten Position gehalten wird, in der er mit seinem zylindrischen Umfang in das im Kreuzungsbereich der Schlitze gelegene Ende des längeren Schlitzes ragt, wobei er ein dieses Ende weitgehend ausfüllenden, die Verlagerung des im längeren Schlitz geführten Kettengliedes in den Kreuzungsbereich der Schlitze verhindernden Anschlag bildet, und daß der Bolzen gegen die Wirkung der ihn in der ersten Position haltenden Feder in eine zweite Position überführbar ist, in der seine Nut das im Kreuzungsbereich der Schlitze gelegene Ende des längeren Schlitzes bildet.

Das erfindungsgemäße Bauteil bietet den Vorteil, daß seine Position an einer Kette bequem und einfach an veränderte Gegebenheiten angepaßt werden kann. Maßgeblich für die Erreichung des erzielten Vorteils ist die Anordnung des Sperrelements an einer von der Lage des Spannstiftes bzw. der Spannhülse der bekannten Konstruktion abweichenden Stelle und die Ausbildung der Nut als ein Schlitzende, wobei die Lage des Sperrelementes eine besonders vorteilhafte Ausgestaltungsmöglichkeit des Bauteils eröffnet, die darin besteht, das Sperrelement als Doppelsicherung für zwei Anschlußstellen zu nutzen.

### Kurze Beschreibung der Zeichnungen

Weitere Merkmale und Einzelheiten der Erfindung ergeben sich aus den Unteransprüchen und der nachstehenden Beschreibung mehrerer in der beigefügten Zeichnung dargestellter Ausführungsformen der Erfindung. Es zeigen:
- Fig. 1: eine Seitenansicht eines besonders vorteilhaften Bauteils,
- Fig. 2: teilweise im Schnitt die Vorderansicht des Bauteils gemäß Fig. 1 in einer ersten Position des Sperrelementes,
- Fig. 3: teilweise im Schnitt eine der Fig. 1 entsprechende Seitenansicht bei aus der in Fig. 2 dargestellten Position entferntem Sperrelement,
- Fig. 4: teilweise im Schnitt die Vorderansicht des Bauteils und des Sperrelements in seiner zweiten Position,
- Fig. 5: teilweise im Schnitt die Seitenansicht eines modifizierten Bauteils,
- Fig. 6: die Stirnansicht des Bauteils gemäß Fig. 5,
- Fig. 7: teilweise im Schnitt eine Draufsicht auf die Schlitze des Grundkörpers des Bauteils gemäß Fig. 5 bei in seine Freigabestellung überführtem Sperrelement,
- Fig. 8: teilweise im Schnitt die Vorderansicht eines weiteren Bauteils,
- Fig. 9: teilweise im Schnitt die Seitenansicht des mit einem Kettenstrang verbundenen Bauteils gemäß Fig. 8,
- Fig. 10: die Vorderansicht einer aus zwei identischen Bauteilen gebildeten Verkürzungsanordnung für einen Kettenstrang und
- Fig. 11: die Seitenansicht der Anordnung gemäß Fig. 10 in einem unverkürzten Kettenstrang.

### Wege zur Ausführung der Erfindung

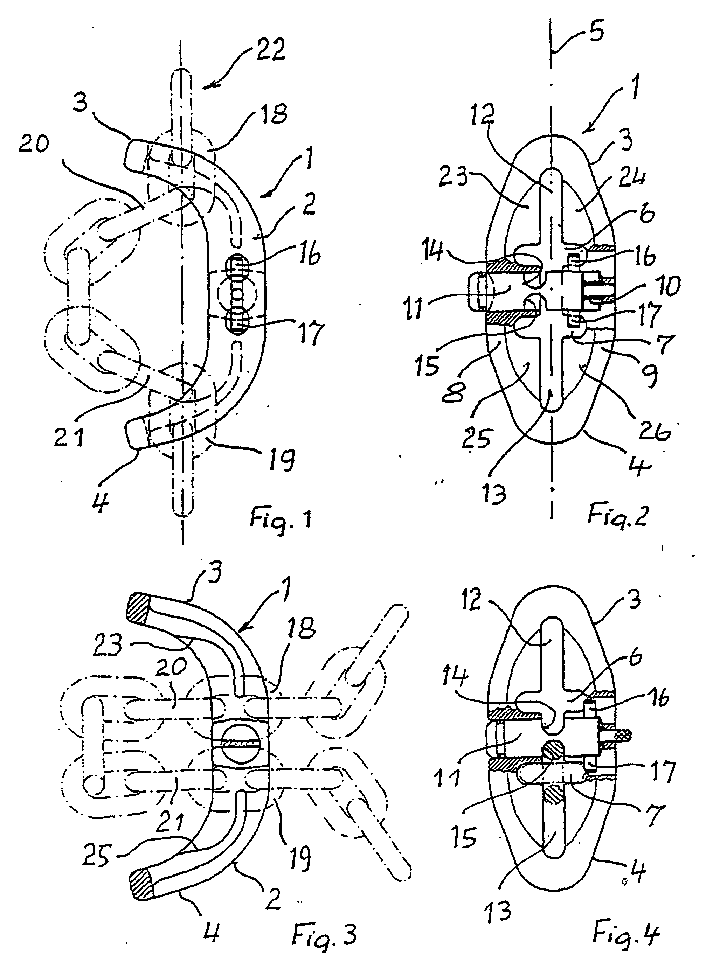

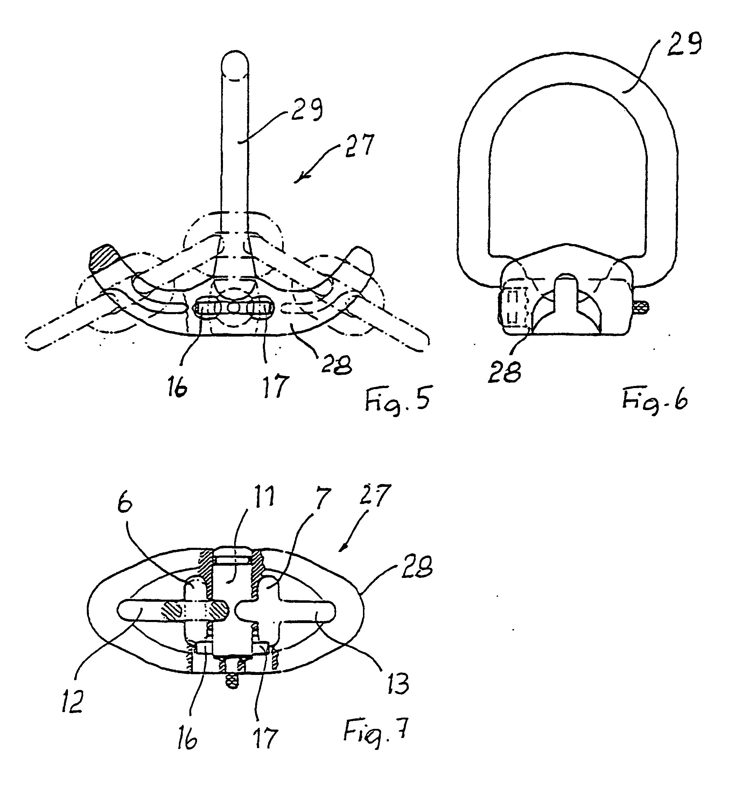

In den Figuren 1 bis 4 ist mit 1 allgemein ein Bauteil bezeichnet, dessen Grundkörper 2 C-förmig ausgebildet ist und folglich über zwei abgewinkelte Enden 3 und 4 verfügt. Der Grundkörper 2 weist zwei senkrecht zu seiner Längsachse 5 orientierte kurze Schlitze 6 und 7 und einen von Haus aus durchgehenden Schlitz auf, der aber durch einen in den Seitenwänden 8,9 des Grundkörpers 2 gegen die Wirkung einer Feder 10 hin- und herverschiebbaren Bolzen 11 in zwei längere Schlitze 12 und 13 unterteilt ist, deren kürzeres Ende von in den Bolzen 11 eingearbeiteten geraden Nuten 14 und 15 gebildet wird, wie dies die Fig. 4 zeigt. Der Bolzen 11 besitzt zwei von den Enden einer in eine Bohrung des Bolzen 11 eingepreßten Spannhülse gebildete Vorsprünge 16, 17 , die in der in Fig. 2 dargestellten Sperrstellung des Bolzens 11 in das jeweils rechte Ende der beiden kürzeren Schlitze 6,7 ragen. Die Vorsprünge 16,17 erfüllen eine Doppelfunktion, indem sie zum einen eine Drehsicherung für den Bolzen 11 bilden und indem sie zum anderen sicherstellen, daß der Bolzen 11 erst dann in seine in Fig. 2 dargestellte Sperrstellung übergehen kann, wenn keines der auf die in die längeren Schlitze 12,13 einführbaren Kettenglieder 18,19 folgenden Kettenglieder 20,21 sich im Bereich der kürzeren Schlitze 6,7 befindet. Durch die zuletzt beschriebene Funktion wird verhindert, daß bei einer unsachgemäßen Anwendung des Bauteils die in der Kette wirksamen Zugkräfte über den Bolzen 11 in das Bauteil 1 eingeleitet werden.

Fig. 1 zeigt die Verhältnisse, wie sie bei einem um zwei Glieder verkürzten Kettenstrang 22 gegeben sind. Die Übertragung der in der Kette wirksamen Kräfte auf das im Kraftfluß liegende Bauteil 1 erfolgt über die Buge der Kettenglieder 20 und 21, die sich im Bereich der abgewinkelten Enden 3,4 des Grundkörpers 2 an jeweils beidseits der Schlitze 12,13 gelegenen Stützzonen 23,24 bzw. 25,26 abstützen.

Während die in den Fig. 1 bis 4 dargestellte Anordnung zur Verkürzung eines einzelnen, durchgehenden geraden Kettenstranges dient, zeigen die Figuren 5 bis 7 eine Anordnung, wie sie in Verbindung mit Zweistranggehängen zum Einsatz gelangt. Der Aufbau des Bauteils 27 entspricht weitgehend dem Aufbau des in den Figuren 1 bis 4 dargestellten Bauteils 1, gleiche Teile sind daher mit gleichen Bezugszeichen versehen. Der wesentliche Unterschied gegenüber der zuvor beschriebenen Ausführungsform besteht darin, daß der Grundkörper 28 des Bauteils 27 im wesentlichen T-förmig ausgebildet ist, wobei der eine Art Joch bildende Querbalken des T wie der Grundkörper 2 des Bauteils 1 leicht C-förmig ausgebildet ist und der dem Längsbalken des T entsprechende Teil des Grundkörpers 22 einen als Öse ausgestalteten Aufhängekopf 29 für einen nicht dargestellten Kranhaken formt.

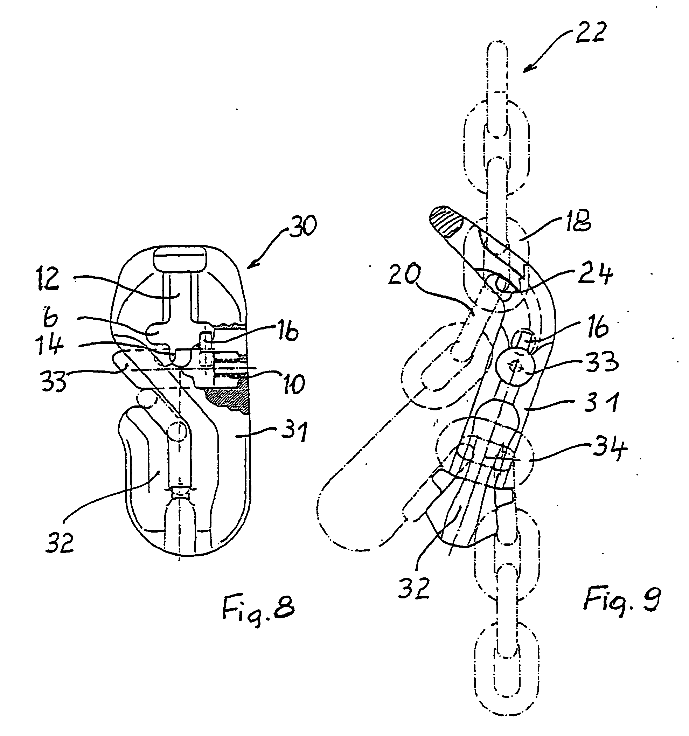

Die Figuren 8 und 9 zeigen ein besonders kompaktes Bauteil 30, das wie das Bauteil 1 gemäß den Figuren 1 bis 4 zum Verkürzen eines einzelnen geraden Kettenstranges dient. In diesem Fall schließt sich an den Schlitze 6,12 und Stützzonen 24 aufweisenden einseitig abgewinkelten Abschnitt eines Grundkörpers 31 ein Verkürzungshaken 32 an, wobei ein leicht modifizierter Bolzen 33 als Sperrelement sowohl für das in den Verkürzungshaken 32 eingehängte Kettenglied 34 als auch für ein in Schlitz 12 geführtes Glied 18 nutzbar ist.

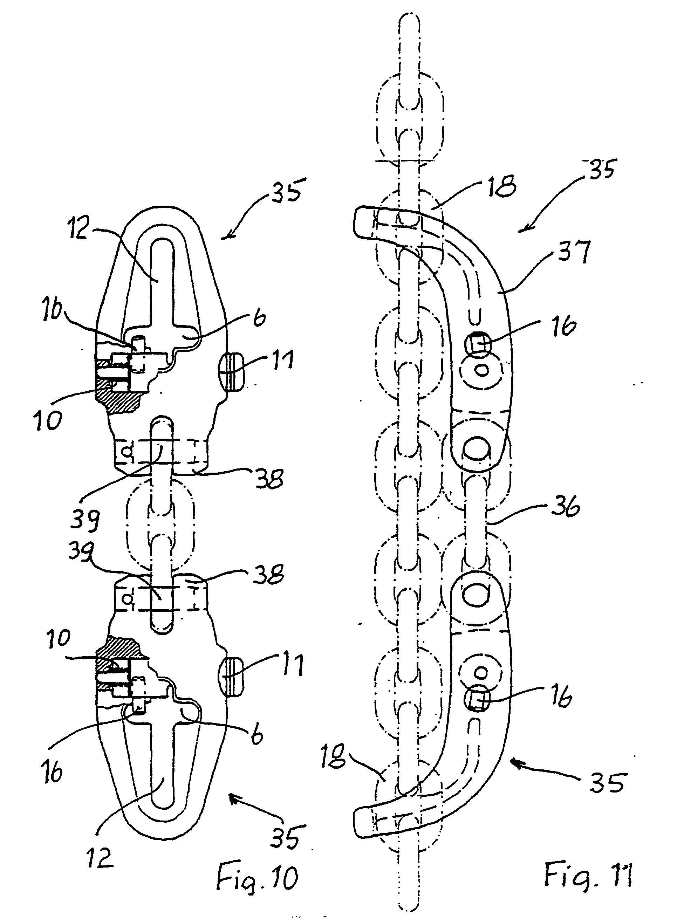

Die Figuren 10 und 11 zeigen schließlich eine Anordnung, bei der zwei identische Bauteile 35 mittels eines aus drei Gliedern bestehenden Kettenstrangabschnitts 36 miteinander verbunden sind. Die beiden Bauteile 34 besitzen jeweils einen Grundkörper 37 mit einem abgewinkelten Ende 3, in das der längere Schlitz 12 eines Schlitzpaares 6,12 ragt. Wie bei den Ausführungsformen gemäß den Figuren 1 bis 4 wird das jeweils im längeren der beiden Schlitze geführte Kettenglied 18 auch hier durch ein als Bolzen 11 ausgebildetes Sperrelement gegen eine Verlagerung in den Kreuzungsbereich der Schlitze 6,12 gesichert. Die einander zugewandten Enden der Grundkörper 37 der Bauteile 35 sind in diesem Fall als Gabelköpfe mit Anschlußgabeln 38 und Haltebolzen 39 ausgebildet.

## Patentansprüche

1. Bauteil zum Einstellen bzw. Verändern der wirksamen Länge von Rundstahlketten, bei dem in einem Grundkörper mindestens zwei sich kreuzende Schlitze angeordnet sind, die in ihrem Kreuzungsbereich eine Einführ- bzw. Durchziehöffnung für die jeweilige Kette bilden und von denen einer länger als der andere ist, wobei der jeweils längere Schlitz außerhalb des Kreuzungsbereiches der Schlitze von zwei Stützzonen begrenzt wird, die zur Abstützung des bogenförmigen Endes jeweils eines Kettengliedes dienen, das auf ein mit seinen Schenkeln in den längeren der beiden Schlitze eingeführtes Kettenglied folgt, welch letzteres durch ein Sperrelement gegen eine Verlagerung in den Bereich der Ein- bzw. Durchziehöffnung sicherbar ist, **dadurch gekennzeichnet, daß** das Sperrelement aus einem hin- und herbewegbaren, an seinem Umfang mit mindestens einer Nut (14 bzw. 15) versehenen Bolzen (11;33) besteht, daß der Bolzen (11;33) durch eine Feder (10) in einer ersten Position gehalten wird, in der er mit seinem zylindrischen Umfang in das im Kreuzungsbereich der Schlitze (6,12 bzw. 7,13) gelegene Ende des längeren Schlitzes (12 bzw. 13) ragt, wobei er ein dieses Ende weitgehend ausfüllenden, die Verlagerung des im längeren Schlitz (12 bzw. 13) geführten Kettengliedes (18 bzw. 19) in den Kreuzungsbereich der Schlitze (6,12 bzw. 7,13) verhindernden Anschlag bildet, und daß der Bolzen (11;33) gegen die Wirkung der ihn in der ersten Position haltenden Feder (10) in eine zweite Position überführbar ist, in der seine Nut (14 bzw. 15) das im Kreuzungsbereich der Schlitze (6,12 bzw. 7,13) gelegene Ende des längeren Schlitzes (12 bzw. 13) bildet.

2. Bauteil nach Anspruch 1, **dadurch gekennzeichnet, daß** der das Sperrelement bildende Bolzen (11; 33) mit mindestens einem Vorsprung (16 bzw. 17) versehen ist, der in der der ersten Position entsprechenden Sperrstellung des Bolzens (11;33) in eines der Enden des parallel zur Längsachse des Bolzens (11;33) orientierten, kürzeren Schlitzes (6 bzw. 7) ragt.

3. Bauteil nach Anspruch 2, **dadurch gekennzeichnet, daß** der Bolzen (11;33) mindestens eine senkrecht zur Längsachse (5) des längeren Schlitzes (12 bzw. 13) verlaufende, durch mindestens einen Vorsprung (16 bzw. 17) gegen Drehung gesicherte gerade Nut (14 bzw. 15) aufweist.

4. Bauteil nach einem der Ansprüche 1 bis 3, **dadurch gekennzeichnet, daß** sein Grundkörper (2) zwei parallel zueinander angeordnete kurze Schlitze (6,7) und einen senkrecht zu den kurzen Schlitzen (6,7) verlaufenden langen Schlitz (12,13) aufweist und daß der lange Schlitz (12,13) im Bereich seines zwischen den kurzen Schlitzen (6,7) gelegenen Zentrums von dem an sich gegenüberliegenden Seiten mit jeweils einer Nut (14 bzw. 15) versehenen Bolzen (11) überbrückt wird.

5. Bauteil nach Anspruch 4, **dadurch gekennzeichnet, daß** sein Grundkörper (2) im wesentlichen C-förmig ausgebildet ist.

6. Bauteil nach Anspruch 4, **dadurch gekennzeichnet, daß** sein Grundkörper (28) im wesentlichen T-förmig ausgebildet ist.

7. Bauteil nach Anspruch 6, **dadurch gekennzeichnet, daß** der dem Querbalken des T entsprechende Teil des Grundkörpers (18) mit den Schlitzen (6,12 bzw. 7,13) versehen und sein dem Längsbalken des T entsprechender Teil als Aufhängekopf (29) ausgebildet ist.

8. Bauteil nach einem der Ansprüche 1 bis 3, **dadurch gekennzeichnet, daß** sich der durch Stützzonen (23,24) begrenzte Abschnitt des längeren Schlitzes (12) in einem abgewinkelten Ende des Grundkörpers (31) befindet und daß der Grundkörper (31) an seinem dem abgewinkelten Ende gegenüberliegenden Ende als Verkürzungshaken (32) ausgebildet ist.

9. Bauteil nach Anspruch 8, **dadurch gekennzeichnet, daß** das zur Einleitung einer Verschiebebewegung in den Bolzen (33) dienende, in seiner Ausgangslage über die Außenseite des Grundkörpers (31) vorstehende Ende des Bolzen (33) eine Sperre für ein in den Verkürzungshaken (32) eingehängtes Kettenglied (34) bildet.

10. Bauteil nach einem der Ansprüche 1 bis 3, **dadurch gekennzeichnet, daß** sich der mit Stützzonen versehene Abschnitt des längeren Schlitzes (12) in einen abgewinkelten Ende des Grundkörpers (37) befindet und daß der Grundkörper (37) an seinem dem abgewinkelten Ende gegenüberliegenden Ende eine Anschlußgabel (38) für ein Kettenglied aufweist.

11. Anordnung mit zwei Bauteilen nach Anspruch 10, **dadurch gekennzeichnet, daß** die beiden Bauteile (35) über einen Kettenstrangabschnitt (36) miteinander verbunden sind.

## Claims

1. A component for regulating or modifying the effective length of round steel chains, in which at least two crossing slots are arranged in a basic body, form an insertion or pull-through opening for the respective chain in their crossing area and of which one is longer than the other, the respective longer slot being bounded outside the crossing area of the slots by two supporting zones which serve to support the curved end in each case of a chain link which follows a chain link inserted with its limbs into the longer of the two slots, it being possible for the latter link to be secured by a blocking element against displacement into the area of the insertion or pull-through opening, **characterized in that** the blocking element comprises a pin (11; 33) that can be moved to and fro and is provided on its circumference with at least one groove (14 or 15), **in that** the pin (11; 13) is held by a spring (10) in a first position, in which it projects with its cylindrical circumference into the end of the longer slot (12 or 13) in the crossing area of the slots (6, 12 or 7, 13), forming a stop that largely fills this end and prevents displacement of the chain link (18 or 19) guided in the longer slot (12 or 13) into the crossing area of the slots (6, 12 or 7, 13), and **in that** the pin (11; 33) can be transferred counter to the action of the spring (10) holding it in the first position into a second position, in which its groove (14 or 15) forms the end of the longer slot (12 or 13) in the crossing area of the slots (6, 12 or 7, 13).

2. The component as claimed in claim 1, **characterized in that** the pin (11; 33) forming the blocking element is provided with at least one protrusion (16 or 17) which, in the blocking position of the pin (11; 33) corresponding to the first position, projects into one of the ends of the shorter slot (6 or 7) oriented parallel to the longitudinal axis of the pin (11; 33).

3. The component as claimed in claim 2, **characterized in that** the pin (11; 33) has at least one straight groove (14 or 15) which runs at right angles to the longitudinal axis (5) of the longer slot (12 or 13), and is secured against rotation by means of at least one protrusion (16 or 17).

4. The component as claimed in one of claims 1 to 3, **characterized in that** its basic body (2) has two short slots (6, 7) arranged parallel to each other and a long slot (12, 13) running at right angles to the short slots (6, 7), and **in that** the long slot (12, 13) is bridged, in the region of its center placed between the short slots (6, 7), by the pin (11) provided on opposite sides with a groove (14 or 15) in each case.

5. The component as claimed in claim 4, **characterized in that** its basic body (2) is substantially C-shaped.

6. The component as claimed in claim 4, **characterized in that** its basic body (28) is substantially T-shaped.

7. The component as claimed in claim 6, **characterized in that** the part of the basic body (18) corresponding to the crossbar of the T is provided with the slots (6, 12 or 7, 13), and its part corresponding to the longitudinal bar of the T is designed as a suspension head (29).

8. The component as claimed in one of claims 1 to 3, **characterized in that** the section of the longer slot (12) that is bounded by supporting zones (23, 24) is located in an angled end of the basic body (31), and **in that** the basic body (31) is designed as a shortening hook (32) at its end opposite the angled end.

9. The component as claimed in claim 8, **characterized in that** the projecting end of the pin (33), serving to introduce a displacement movement into the pin (33) and, in its initial position, protruding beyond the outer side of the basic body (31), forms a block for a chain link (34) hooked into the shortening hook (32).

10. The component as claimed in one of claims 1 to 3, **characterized in that** the section of the longer slot (12) provided with supporting zones is located in an angled end of the basic body (37), and **in that** the basic body (37) has a connecting fork (38) for a chain link at its end opposite the angled end.

11. An arrangement having two components as claimed in claims 10, **characterized in that** the two components (35) are connected to each other via a chain strand section (36).

## Revendications

1. Pièce destinée à ajuster ou à modifier la longueur efficace de chaînes en acier rond, dans laquelle au moins deux fentes se croisant sont disposées dans un corps de base, lesdites fentes formant dans leur zone d'intersection un orifice d'insertion ou de traverse pour la chaîne correspondante et dont l'une des deux est plus longue que l'autre, la fente la plus longue respective étant délimitée à l'extérieur de la zone d'intersection des fentes par deux zones d'appui, qui servent respectivement à l'appui de l'extrémité en forme d'arc d'un maillon, qui succède à un maillon introduit avec ses branches dans la plus longue des deux fentes, ce dernier étant blocable par un élément de blocage contre un déplacement dans la zone d'introduction ou de passage, **caractérisée en ce que** l'élément de blocage est constitué d'un boulon (11 ; 33) pouvant être déplacé en va-et-vient et muni au niveau de sa périphérie d'au moins une rainure (14 ou 15), **en ce que** le boulon (11 ; 33) est maintenu grâce à un ressort (10) dans une première position, dans laquelle il est en saillie avec sa périphérie cylindrique dans l'extrémité de la fente la plus longue (12 ou 13) située dans la zone d'intersection des fentes (6, 12 ou 7, 13), ledit boulon formant une butée comblant en grande partie cette extrémité et empêchant le déplacement du maillon (18 ou 19) guidé dans la fente la plus longue (12 ou 13) dans la zone d'intersection des fentes (6, 12 ou 7, 13), et **en ce que** le boulon (11 ; 33) est transférable dans une seconde position contre l'action du ressort (10) le maintenant dans la première position, sa rainure (14 ou 15) formant l'extrémité de la fente la plus longue (12 ou 13) située dans la zone d'intersection des fentes (6, 12 ou 7, 13) dans ladite seconde position.

2. Pièce selon la revendication 1, **caractérisée en ce que** le boulon (11 ; 33) formant l'élément de blocage est muni d'au moins une saillie (16 ou 17), qui dépasse dans la position de blocage du boulon (11 ; 33) correspondant à la première position dans une des extrémités de la fente la plus courte (6 ou 7), orientée parallèle à l'axe longitudinal du boulon (11 ; 33).

3. Pièce selon la revendication 2, **caractérisée en ce que** le boulon (11 ; 33) présente au moins une rainure droite (14 ou 15) évoluant perpendiculairement à l'axe longitudinal (5) de la fente la plus longue (12 ou 13) et bloquée par au moins une saillie (16 ou 17) contre toute rotation.

4. Pièce selon l'une quelconque des revendications 1 à 3, **caractérisée en ce que** son corps de base (2) présente deux fentes courtes (6, 7) disposées parallèles l'une à l'autre et une fente longue (12, 13) évoluant perpendiculairement aux fentes courtes (6, 7) et **en ce que** la fente longue (12, 13) est franchie dans la zone de son centre situé entre les fentes courtes (6, 7) par le boulon (11) muni d'une rainure (14 ou 15) à chaque fois au niveau des côtés opposés.

5. Pièce selon la revendication 4, **caractérisée en ce que** son corps de base (2) est réalisé pour l'essentiel en forme de C.

6. Pièce selon la revendication 4, **caractérisée en ce que** son corps de base (28) est réalisé pour l'essentiel en forme de T.

7. Pièce selon la revendication 6, **caractérisée en ce que** la partie du corps de base (18) correspondant à la barre horizontale du T est munie des fentes (6, 12 ou 7, 13) et sa partie correspondant à la barre verticale du T est réalisée sous forme de tête de suspension (29).

8. Pièce selon l'une quelconque des revendications 1 à 3, **caractérisée en ce que** la section de la fente la plus longue (12) délimitée par des zones d'appui (23, 24) se trouve dans une extrémité coudée du corps de base (31) et **en ce que** le corps de base (31) est réalisé sous forme de crochet de raccourcissement (32) au niveau de son extrémité opposée à l'extrémité coudée.

9. Pièce selon la revendication 8, **caractérisée en ce que** l'extrémité du boulon (33) servant à l'introduction d'un mouvement coulissant dans le boulon (33) et en saillie dans sa position initiale au-dessus de la face externe du corps de base (31) forme un blocage pour un maillon (34) accroché dans le crochet de raccourcissement (32).

10. Pièce selon l'une quelconque des revendications 1 à 3, **caractérisée en ce que** la section de la fente la plus longue (12) munie de zones d'appui se trouve dans une extrémité coudée du corps de base (37) et **en ce que** le corps de base (37) présente au niveau de son extrémité opposée à l'extrémité coudée un étrier de raccordement (38) pour un maillon.

11. Agencement avec deux pièces selon la revendication 10, **caractérisée en ce que** les deux pièces (35) sont reliées entre elles par l'intermédiaire d'une section de brin de chaîne (36).
